# EUROPEAN PATENT SPECIFICATION

(11) **EP 1 150 474 B1**
(45) Date of publication and mention of the grant of the patent: **05.07.2006**
(21) Application number: 01110370.2
(22) Date of filing: 26.04.2001
(51) Int. Cl.: H04L 29/12

(54) **IP address assignment system and process method thereof**
IP Addressenzuweisungsvorrichtung und entsprechendes Verfahren
Système d' attribution d'adresses IP et procédé correspondant

(30) Priority: 26.04.2000 JP 2000131565
(43) Date of publication of application: 31.10.2001
(73) Proprietor: NEC CORPORATION, Tokyo (JP)
(72) Inventor: Yoshimura, Shigei, Minato-ku, Tokyo (JP); Ono, Seiji, 4-28, Mita 1-chome, Minato-ku, Tokyo (JP)
(74) Representative: Glawe, Delfs, Moll

(56) References cited:
- WO-A-99/01969
- WO-A-99/57866
- US-A- 5 598 536
- US-A- 5 790 548
- RIGNEY C., ET AL: "Remote Authentication Dial In User Service (RADIUS)" REQUEST FOR COMMENTS (RFC) 2138, 1 April 1997 (1997-04-01), pages 1-65,

## Description

### BACKGROUND OF THE INVENTION

The present invention relates to an IP (internet protocol) address assignment system and process method thereof, and more particularly to an IP address assignment system including a remote access server connected to a subscriber exchange by an NNI (network node interface) and process method thereof.

### Prior art

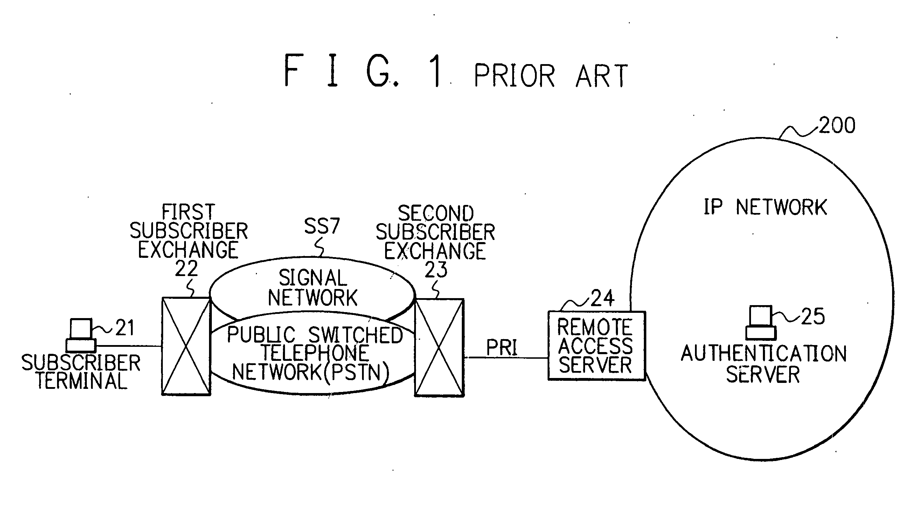

A conventional IP (internet protocol) address assignment system and its process method will be described with reference to Fig. 1 to Fig. 3.

In Fig. 1, there is shown a conventional IP address assignment system including a remote access server. A conventional IP address assignment system including a remote access server comprises a subscriber terminal 21, a first subscriber exchange 22, a second subscriber exchange 23, a remote access server 24 and an authentication server 25 connected to the remote access server 24 via an IP network 200 such as Internet.

The subscriber terminal 21 and the first subscriber exchange 22 are connected to each other by a UNI (user network interface) such as an analog line. The first subscriber exchange 22 and the second subscriber exchange 23 are connected to each other by an NNI (network node interface) which is composed of a public switched telephone network (PSTN) and an SS7 (signalling system No. 7) network. The second subscriber exchange 23 and the remote access server 24 are connected to each other by a PRI (primary rate interface). The remote access server 24 contains a plurality of service providers.

As shown in Fig. 1, in the conventional IP address assignment system, the authentication server 25 has been used for automatically carrying out an assignment of an IP address to the user such as the subscriber terminal 21. The authentication server 25 controls the IP addresses to be assigned to the users such as the subscriber terminal 21 who makes a contract with each service provider contained in the remote access server 24. In this case, since the remote access server 24 and the second subscriber exchange 23 are linked by the UNI, the service provider cannot be identified by a receive number on the same channel. Hence, the subscriber terminal 21 accesses to the authentication server 25 via the remote access server 24 to carry out an authentication process after the remote access server 24 allows the authentication server 25 to receive an authentication request sent from the subscriber terminal 21, and even when there is not enough IP address, that is, lacking in the IP address to be assigned to the subscriber terminal 21, a telephone call cost can be charged to the user.

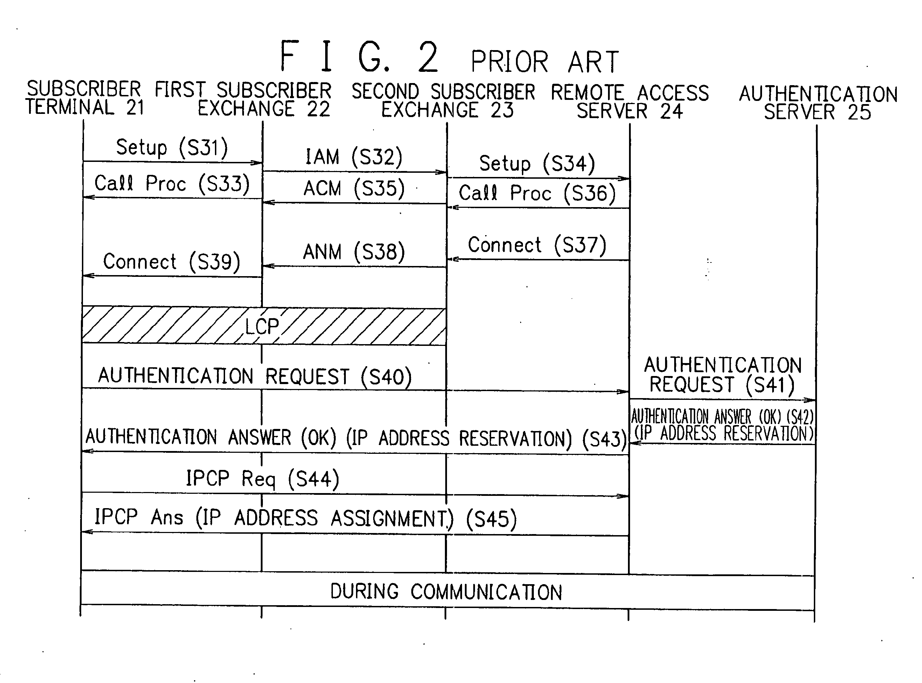

Fig. 2 shows an operation of the conventional IP address assignment system shown in Fig. 1 when the IP address can be reserved for the user. First, the subscriber terminal 21 sends a "Set up" signal for representing that a start of a calling set up has been requested to the first subscriber exchange 22 in step S31. The first subscriber exchange 22 sends an IAM (initial address message) signal to the second subscriber exchange 23 via the SS7 network in step S32 and also sends a "Call Proceeding (refer to "Call Proc" in below)" signal for representing that the requested calling setup has been started to the subscriber terminal 21 in step S33. The aforementioned IAM signal represents that the subscriber has made a dial call and includes information such as telephone call numbers of a sender and a receiver, and the like.

Then, the second subscriber exchange 23 sends the "Set up" signal to the remote access server 24 in step S34 and sends an ACM (address complete message) signal to the first subscriber exchange 22 in step S35. This ACM signal represents that the second subscriber exchange 23 can accept the call in response to the IAM signal sent from the first subscriber exchange 22. By sending back the ACM signal from the second subscriber exchange 23 to the first subscriber exchange 22, the second subscriber exchange 23 becomes in calling the remote access server 24.

The remote access server 24 sends the "Call Proc" signal to the second subscriber exchange 23 in step S36 and then sends a "Connect" signal for representing that a calling has been accepted to the second subscriber exchange 23 in step S37. After receiving the "Connect" signal from the remote access server 24, the second subscriber exchange 23 sends an ANM (answer message) signal to the first subscriber exchange 22 via the SS7 network in step S38. After receiving the ANM signal from the second subscriber exchange 23, the first subscriber exchange 22 sends the "Connect" signal to the subscriber terminal 21 in step S39. The above-described ANM signal is sent from the second subscriber exchange 23. Thereby by sending the signals, the charge of the telephone call cost to the subscriber terminal 21 is started.

Now, a link between the subscriber terminal 21 and the remote access server 24 is set up by an LCP (link control protocol) or the like. Usually, the LCP is used in a PPP (point to point protocol) employed in an Internet connection using telephone lines. After the link between the subscriber terminal 21 and the remote access server 24 is built up in the LCP phase, the subscriber terminal 21 sends an authentication request to the remote access server 24 in step S40, and the remote access server 24 transfers the authentication request to the authentication server 25 in step S41. The authentication server 25 performs an authentication process based on the authentication information sent from the subscriber terminal 21 to determine a positive authentication answer (OK) and gives the IP address to the remote access server 24 in step S42.

The remote access server 24 sends the positive authentication answer OK determined by the authentication server 25 to the subscriber 21 in step S43, and after receiving the positive authentication answer OK from the remote access server 24, the subscriber terminal 21 sends an "IPCP Req" signal for requesting IP address assignment to the user or the subscriber terminal 21 to the remote access server 24 in step S44. In this case, the PPP is composed of the LCP and an NCP (network control protocol), and following the LCP, the NCP prepares the next stage such as IP of the data communication. The IPCP (internet protocol control protocol) is used for setting up the link of the IP in the NCP phase of the PPP. After receiving the "IPCP Req" signal from the subscriber terminal 21, the remote access server 24 carries out an "IPCP Ans (IP address assignment)" operation of the IP address reserved in step S42, that is, the assignment of the reserved IP address to the subscriber terminal 21 in the IPCP phase in step S45.

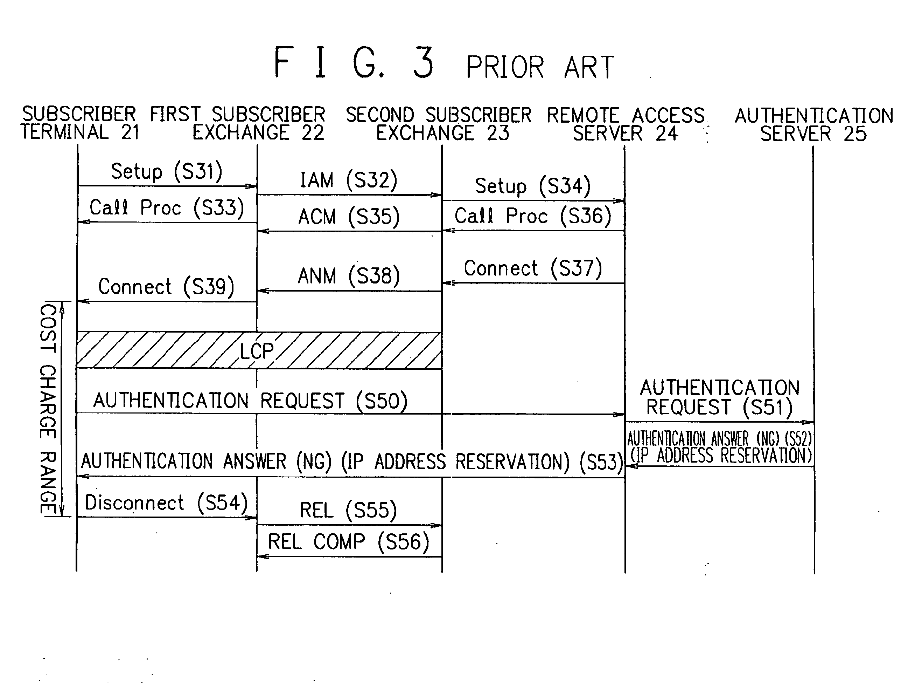

Fig. 3 shows an operation of the conventional IP address assignment system shown in Fig. 1 when the IP address cannot be reserved for the user. In Fig. 3, the operation up to the build-up of the link between the subscriber terminal 21 and the remote access server 24 is the same as that shown in Fig. 2 and thus the description thereof can be omitted for brevity.

After the link between the subscriber terminal 21 and the remote access server 24 is built up in the LCP phase, the subscriber terminal 21 sends the authentication request to the remote access server 24 in step S50, and the remote access server 24 passes the authentication request to the authentication server 25 in step S51. The authentication server 25 carries out an authentication process on the basis of the authentication information sent from the subscriber terminal 21 to determine a negative authentication answer (NG) and sends back the negative authentication answer (NG) to the remote access server 24 in step S52. The remote access server 24 sends the negative authentication answer (NG) determined by the authentication server 25 to the subscriber terminal 21 in step S53.

After receiving the negative authentication answer (NG) from the remote access server 24, the subscriber terminal 21 sends a "Disconnect" signal for representing a disconnect request of the calling to the first subscriber exchange 22 in step S54. After receiving the "Disconnect" signal from the subscriber terminal 21, the first subscriber exchange 22 sends a "REL" signal for releasing a channel or the like to the second subscriber exchange 23 in step S55, and the second subscriber exchange 23 sends back a "REL COM" signal for representing a completion of the channel release to the first subscriber exchange 22 to finish the connection in step S56.

However, in the conventional IP address assignment system described above, as shown in Fig. 3, when the authentication server 25 sends the answer in response to the authentication request to the remote access server 24 in step S52, in the case of lacking of the IP address to be assigned to the user in the authentication server 25, the answer becomes the negative authentication answer (NG). Since there is no cooperation the signal processing with the IP address source, the charge of the telephone call cost is caused between the LCP phase and the authentication phase.

In EP-0927482-A a method for network access server provides a combination with one or more authentication servers for internet corporate network authentication and access. Two phases of authentication are used when a remote user accesses.

In Rigney C. et al. "Remote authentication dial in user service (RADIUS)", Request for Comments 2138, April 1, 1997, pages 1 to 65, XP-002270100 an Internet standards track protocol is disclosed. A framed-IP-address indicates an address to be configured for an user. It is used in access-accept packets serving as a hint by the network access server to the server that it would prefer that address.

### SUMMARY OF THE INVENTION

Accordingly, it is an object of the present invention to provide an IP address assignment system and its process method in view of the aforementioned problems of the prior art, which is capable of stopping a wrong charge of a telephone call cost when lacking in an IP address to be assigned to a user, by a signal processing using a combination of a remote access server and a resource control server.

A large capacity remote access server contains a large capacity trunk line and interworks a plural of service provider connected by an NNI which is directly signal processed with SS7. By coopering the large capacity remote access server with a resource control server, the present invention comprises steps of performing a resource of line efficiency and IP address assignment efficiency, controlling IP address by the resource control server and disconnecting by the subscriber terminal when there is no IP address to be assigned.

These and other objects of the present invention are achieved by an internet protocol address assignment system according to independent claim 1 and a processing method according to independent claim 4. The dependent claims treat further advantageous developments of the present invention.

In an internet protocol address assignment system of the present invention, when there is the internet protocol address to be assigned to the subscriber terminal, the resource control server reserves the internet protocol address, and the remote access server assigns the internet protocol address reserved in the resource control server to the subscriber terminal when the subscriber terminal is authenticated by the authentication server.

In an internet protocol address assignment system of the present invention, when there is no internet protocol address to be assigned to the subscriber terminal, the resource control server cannot reserve the internet protocol address, and the remote access server permits the subscriber exchange to release the line.

In an internet protocol address assignment system of the present invention, the authentication server executes the authentication on the basis of a sender number of the subscriber terminal.

In an internet protocol address assignment system of the present invention, the remote access server is connected to the subscriber exchange via a public switched telephone network and a signalling system No. 7 signal network.

In accordance with another aspect of the present invention, there is provided a processing method of an internet protocol address assignment system comprising a subscriber terminal, a subscriber exchange, a remote access server, an authentication server and a resource control server, the remote access server being connected to the subscriber exchange using a network node interface, an internet protocol address being assigned to the subscriber terminal using the authentication server and the resource control server, comprising the steps of: calling from the subscriber terminal to the subscriber exchange; notifying the remote access server of the calling from the subscriber terminal to the subscriber exchange; confirming whether or not there is any internet protocol address to be assigned to the subscriber terminal by the resource control server; reserving the internet protocol address to be assigned to the subscriber terminal in the resource control server on the basis of the confirmation result of the resource control server; notifying the remote access server whether or not the resource control server reserves the internet protocol address to be assigned to the subscriber terminal; authenticating the subscriber terminal by the authentication server; notifying the remote access server of the authentication result of the authentication server; and assigning the internet protocol address reserved in the resource control server to the subscriber terminal when the subscriber terminal is authenticated by the authentication server.

In a processing method of an internet protocol address assignment system of the present invention, when there is the internet protocol address to be assigned to the subscriber terminal, the resource control server reserves the internet protocol address, and the remote access server assigns the internet protocol address reserved in the resource control server to the subscriber terminal when the subscriber terminal is authenticated by the authentication server.

In a processing method of an internet protocol address assignment system of the present invention, when there is no internet protocol address to be assigned to the subscriber terminal, the resource control server notifies the remote access server that the resource control server cannot reserve the internet protocol address, and the remote access server permits the subscriber exchange to release the line.

In an IP address assignment system and its process method according to an aspect of the present invention, a large scale remote access server containing a plurality of service providers is connected to a subscriber exchange by an NNI which contains a trunk line such as an SDH and carries out a direct signal processing with an SS7 network and cooperates with a resource control server to improve efficiency of line source and IP address assignment. The resource control server controls the IP addresses to be assigned to subscriber terminals. When there is no IP address to be assigned to the subscriber terminal, the resouce control server cannot reserve the IP address and the subscriber terminal disconnects the calling.

### BRIEF DESCRIPTION OF THE DRAWINGS

The objects, features and advantages of the present invention will become more apparent from the consideration of the following detailed description, taken in conjunction with the accompanying drawings, in which:
Fig. 1 is a schematic diagram showing a conventional IP address assignment system;
Fig. 2 is a sequential diagram showing an operation of the conventional IP address assignment system shown in Fig. 1 when an IP address can be reserved for a user;
Fig. 3 is a sequential diagram showing an operation of the conventional IP address assignment system shown in Fig. 1 when an IP address cannot be reserved for the user;
Fig. 4 is a schematic diagram showing an IP address assignment system according to a first embodiment of the present invention;
Fig. 5 is a schematic diagram showing one example of the IP address assignment system shown in Fig. 4;
Fig. 6 is a sequential diagram showing an operation of the IP address assignment system shown in Fig. 4 when an IP address can be reserved for a user;
Fig. 7 is a sequential diagram showing an operation of the IP address assignment system shown in Fig. 4 when an IP address cannot be reserved for the user;
Fig. 8 is a schematic diagram showing an IP address assignment system according to a second embodiment of the present invention; and
Fig. 9 is a sequential diagram showing an operation of the IP address assignment system shown in Fig. 8 when an IP address cannot be reserved for the user.

### DESCRIPTION OF THE PREFERRED EMBODIMENTS

### First embodiment

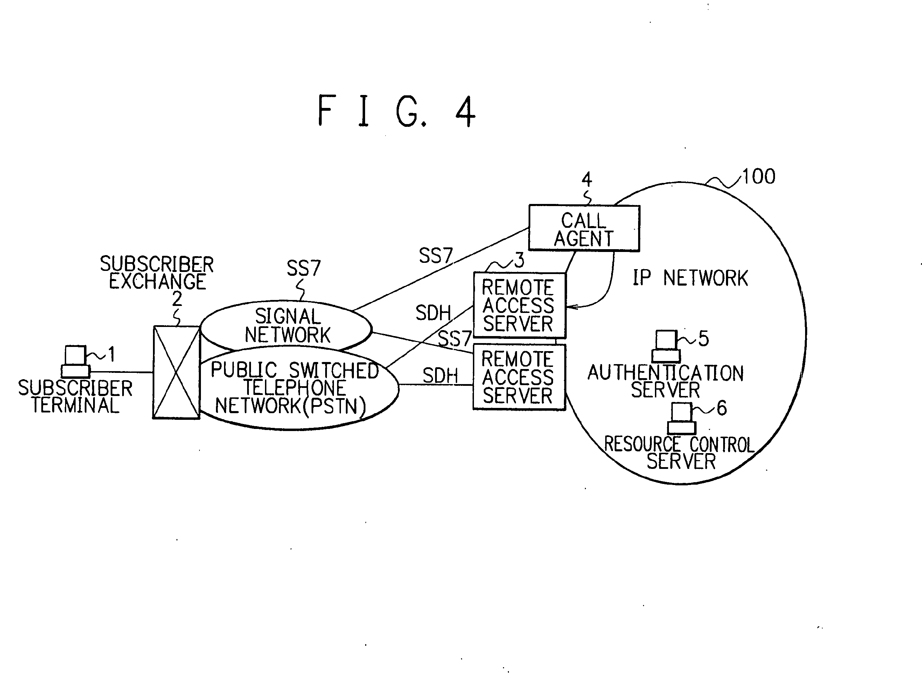

Referring now to the drawings, there is shown in Fig. 4 an IP address assignment system according to a first embodiment of the present invention. In Fig. 4, an IP address assignment system comprises a subscriber terminal 1, a subscriber exchange 2, a remote access server 3, a call agent 4, an authentication server 5 and a resource control server 6. The authentication server 5 and the resource control server 6 are connected to an IP network 100 such as an Internet network.

The subscriber terminal 1 is a user terminal for use in accessing to the Internet or the like and is connected to the subscriber exchange 2 on dial-up telephone lines. At this time, a network connection based on the PPP is employed. The subscriber exchange 2 is connected to the subscriber terminal 1 via a modem (not shown), a TA (terminal adapter) for the ISDN, a PIAFS card for a PHS (personal handy phone), or the like. The subscriber exchange 2 is also connected to the remote access server 3 via a public switched telephone network and an SS7 network. The present invention is not restricted used line(s) and the modem. The modem is suitably selected by a kind of used line. And the present invention may connect with high speed correspondence.

The remote access server 3 interworks a large capacity trunk line such as an SDH (synchronous digital hierarchy) or the like, and is connected to the subscriber exchange 2 by the NNI which contains and performs a direct signal processing on the SS7 network. The remote access server 3 constitutes a plurality of service providers. When receiving a calling from the subscriber terminal 1, the remote access server 3 reserves an IP address for a user and confirms whether or not the IP address can be assigned to the user. The call agent 4 executes a call proceeding based on a NO. 7 common line signal system (SS7 network) as a standard interface of a public telephone network on the IP network 100.

The authentication server 5 along with the resource control server 6, are connected to the IP network 100 and carries out an authentication process requested from the subscriber terminal 1 via the subscriber exchange 2 and the remote access server 3. The resource control server 6 controls the IP addresses to be assigned to certain lines of subscriber terminals 1 or users contracted with service providers. In the IP address assignment system of the present invention, when the IP address can be assigned to the subscriber terminal 1, the resource control server 6 assigns the IP address to the remote access server 3 and then executes the authentication process of the user or the subscriber terminal 1. Meanwhile, when the IP address cannot be assigned to the subscriber terminal 1, the calling is disconnected at that time. When the IP address is reserved for the user, each service provider is identified by the receive number.

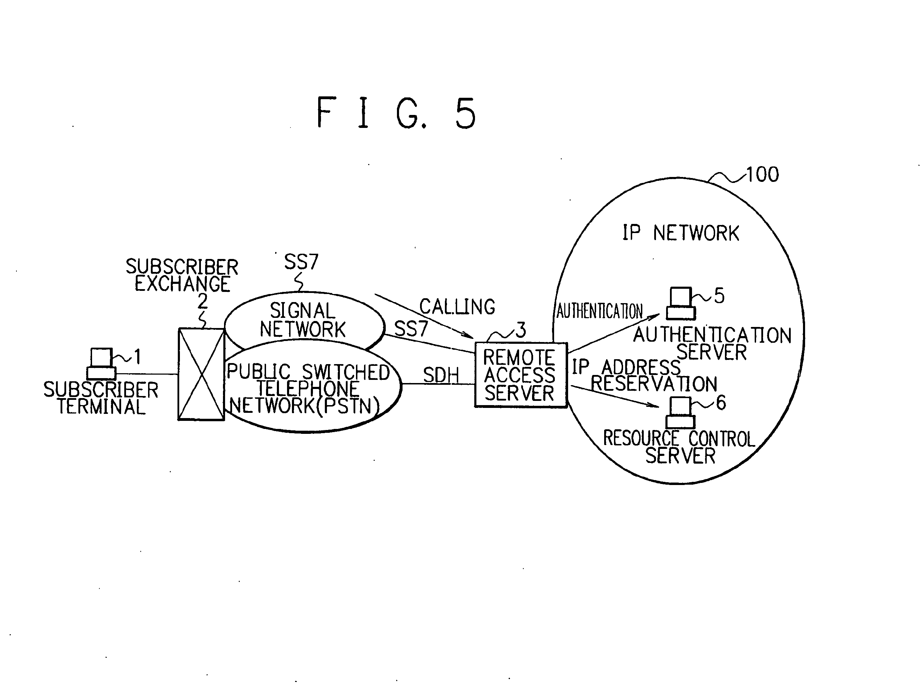

Fig. 5 illustrates one example of the IP address assignment system shown in Fig. 4, in which the signals as regards the remote access server 3 and the resource control server 6 are shown. In Fig. 5, the remote access server 3 is connected to the subscriber exchange 2 by a speech line such as an SDH or the like via the public switched telephone network and by an SS7 signal (No. 7 common line signal) via the SS7 network. The remote access server 3 is also connected to the authentication server 5 and the resource control server 6 via the IP network 100.

When receiving a calling by the SS7 signal, the remote access server 3 makes a reservation of the IP address to the resource control server 6. When the IP address remains to be reserved, the resource control server 6 reserves the IP address for the user and sends a reservation finish answer to the remote access server 3. On the other hand, when no IP address remains to be reserved, the subscriber terminal 1 disconnects the calling by the SS7 signal.

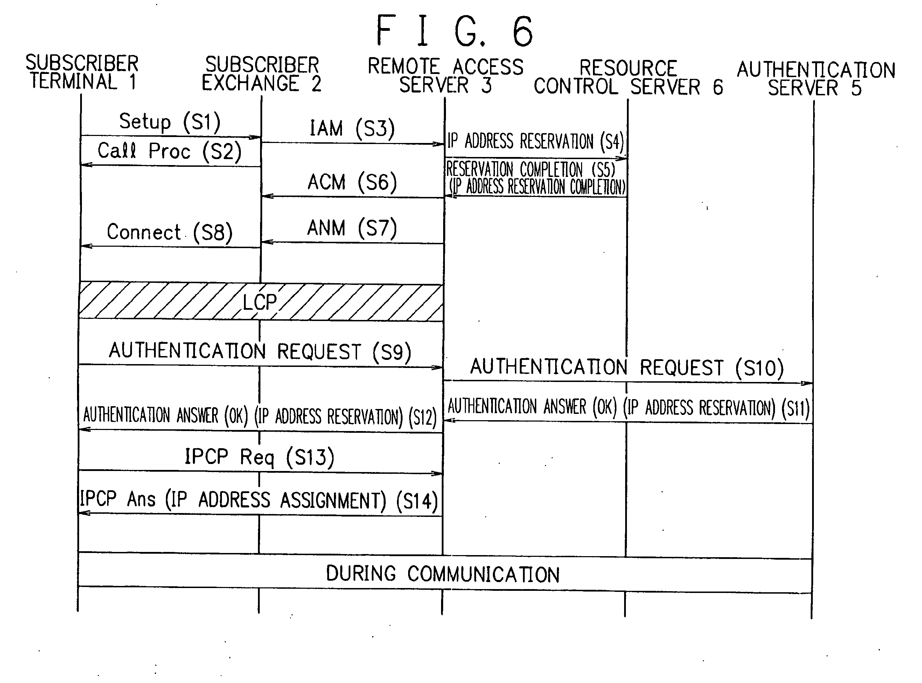

Fig. 6 shows an operation of the IP address assignment system shown in Fig. 4 when the IP address can be reserved for the user. In Fig. 6, first, the subscriber terminal 1 sends a "Setup" signal for representing that a start of a calling setup has been requested to the subscriber exchange 2 in step S1, and after receiving the "Setup" signal from the subscriber terminal 1, the subscriber exchange 2 sends back a "Call Proc" signal for representing that the requested calling setup has been started to the subscriber terminal 1 in step S2. The subscriber exchange 2 also sends an IAM (initial address message) signal to the remote access server 3 via the SS7 network in step S3. This IAM signal represents that the user or the subscriber terminal 1 has made a dial call, as described above, and includes information such as telephone call numbers of a sender and a receiver, and the like.

Then, the remote access server 3 sends an "IP address reservation" signal to the resource control server 6 in step S4, and the resource control server 6 confirms whether or not there is any IP address to be assigned to the subscriber terminal 1. At this time, the IP address reservation is conducted by sending a parameter of the IAM signal received by the remote access server 3 and the IAM signal includes information such as a receive number or the like.

When there is the IP address to be assigned to the subscriber terminal 1, the resource control server 6 sends back a reservation complete notice including IP address information to the remote access server 3 in step S5. That is, the resource control server 6 carries out an IP address reservation process as follows. The resource control server 6 confirms whether or not the IP address of the concerned service provider is present on the basis of the information such as the receive number within the IAM signal sent from the remote access server 3 and further confirms whether or not the IP address can be reserved for the user. The resource control server 6 determines that the IP address can be reserved for the user.

As a result of the completion of the IP address reservation, the remote access server 3 sends an ACM (address complete message) signal to the subscriber exchange 2 via the SS7 network in step S6. The remote access server 3 then sets up devices and the like and sends an ANM (answer message) signal to the subscriber exchange 2 via the SS7 network in step S7. After receiving the ANM signal from the remote access server 3, the subscriber exchange 2 sends a "Connect" signal for representing that a calling has been accepted to the subscriber terminal 1 to build up a link between the subscriber terminal 1 and the remote access server 3 by the LCP or the like in step S8. When the link between the subscriber terminal 1 and the remote access server 3 is built up in the LCP phase, the subscriber terminal 1 sends an authentication request to the remote access server 3 in step S9.

The remote access server 3 transfers the authentication request to the authentication server 5 in step S10. The authentication server 5 carries out an authentication process based on the authentication information sent from the subscriber terminal 1 to determine a positive authentication answer (OK) and sends the positive authentication answer (OK) result to the remote access server 3 in step S11. After receiving the positive authentication answer (OK) from the authentication server 5, the remote access server 3 sends the fact of the positive authentication answer (OK) determined by the authentication server 5 to the subscriber terminal 1 in step S12.

After receiving the positive authentication answer (OK) from the remote access server 3, the subscriber terminal 1 sends an "IPCP Req (IPCP Request)" signal for requesting IP address assignment to the user or the subscriber terminal 1 to the remote access server 3 in step S13. After receiving the "IPCP Req" signal from the subscriber terminal 1, the remote access server 3 executes an "IPCP Ans (IP address assignment)" operation of the IP address reserved in step S5, that is, the assignment of the reserved IP address to the subscriber terminal 1 in the IPCP phase in step S14.

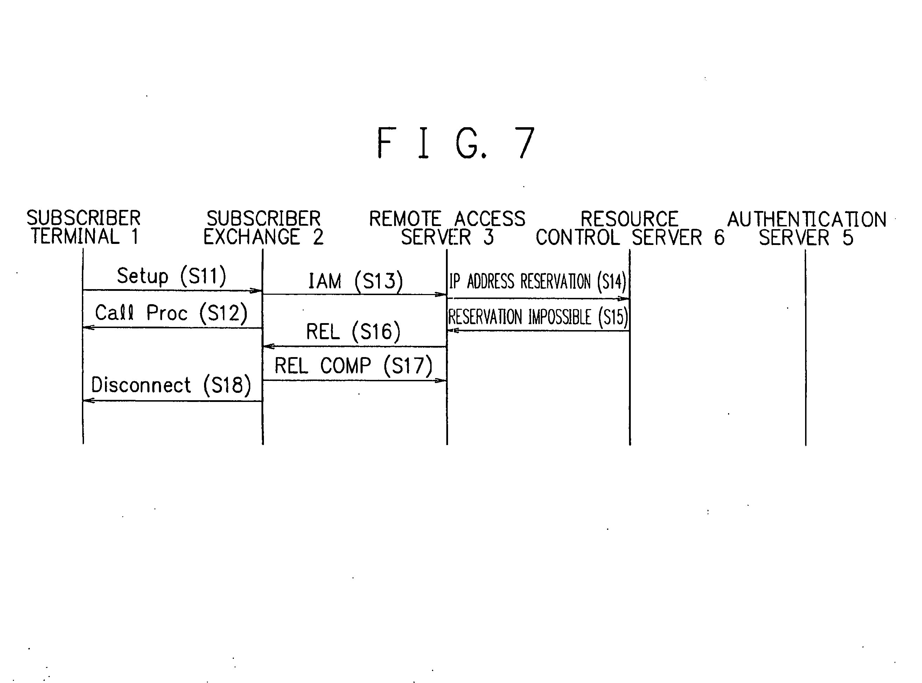

Fig. 7 shows an operation of the IP address assignment system shown in Fig. 4 when the IP address cannot be reserved for the user. In Fig. 7, first, the subscriber terminal 1 sends the "Setup" signal to the subscriber exchange 2 in step S11, and after receiving the "Set up" signal from the subscriber terminal 1, the subscriber exchange 2 sends back the "Call Proc" signal to the subscriber terminal 1 in step S12. The subscriber exchange 2 also sends the IAM signal to the remote access server 3 via the SS7 network in step S13.

Then, the remote access server 3 sends the "IP address reservation" signal to the resource control server 6 in step S14, and the resource control server 6 confirms whether or not there is any IP address to be assigned to the subscriber terminal 1. When there is no IP address to be assigned to the subscriber terminal 1, the resource control server 6 sends back a negative IP address reservation answer to the remote access server 3 in step S15.

Since the IP address cannot be reserved for the subscriber terminal 1, the remote access server 3 sends an "REL (Release)" signal for representing channel release to the subscriber exchange 2 via the SS7 network in the same manner as a trunk resource blocking case in step S16. After receiving the "REL" signal from the remote access server 3, the subscriber exchange 2 sends a "REL COM (Release complete)" signal for representing a channel release completion to the remote access server 3 in step S17 and also sends a "disconnect" signal for requesting a calling disconnection to the subscriber terminal 1 to finish the connection in step S18. The subscriber terminal 1 then disconnects the calling.

### Further embodiment not covered by the claims

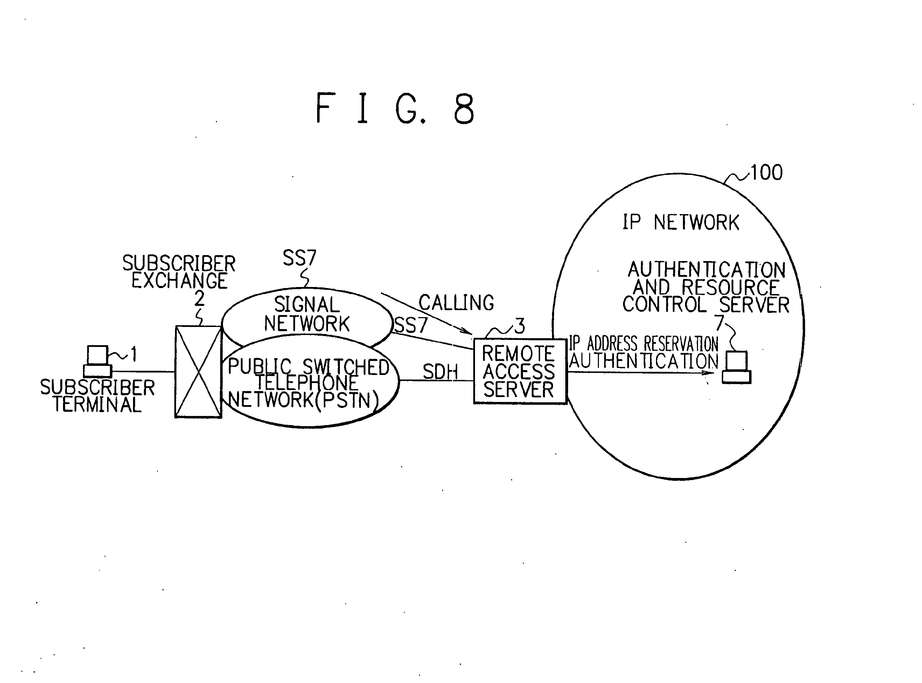

In Fig. 8, there is shown an IP address assignment system according to a second embodiment of the present invention, wherein like reference characters designate like or corresponding parts shown in Fig. 4 showing the first embodiment and thus the repeated description thereof can be omitted for brevity. In Fig. 8, the IP address assignment system comprises a subscriber terminal 1, a subscriber exchange 2, a remote access server 3 and an authentication and resource control server 7 which is connected to the remote access server 3 via an IP network 100.

In this embodiment, the authentication and resource control server 7 has substantially the same hardware as the combination of the resource control server 6 and the authentication server 5 of the first embodiment described above. The authentication and resource control server 7 has the cooperated with functions of the resource control and the sequence of the authentication operation using a sequence of a conventional authentication server. In this embodiment, since the resource control function and the authentication function are cooperated, this construction can be applied to the authentication operation based on the information of the IAM signal in addition to the IP address control. For example, the authentication operation based on the sender number can be carried out when reserving the IP address.

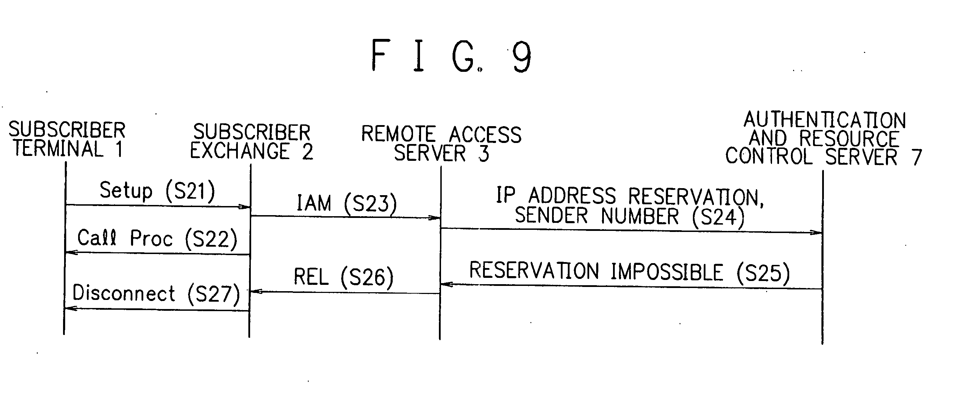

Fig. 9 shows an operation of the IP address assignment system shown in Fig. 8 when the IP address cannot be reserved for the user. In Fig. 9, first, the subscriber terminal 1 sends the "Setup" signal for representing that the start of the calling setup has been requested to the subscriber exchange 2 in step S21, and after receiving the "Setup" signal from the subscriber terminal 1, the subscriber exchange 2 sends back the "Call Proc" signal for representing that the requested calling setup has been started to the subscriber terminal 1 in step S22. The subscriber exchange 2 also sends the IAM (initial address message) signal to the remote access server 3 via the SS7 network in step S23.

Then, the remote access server 3 sends an "IP address reservation - sender number" signal to the authentication and resource control server 7 in step S24, and the authentication and resource control server 7 confirms whether or not there is any IP address to be assigned to the subscriber terminal 1. When there is no IP address to be assigned to the subscriber terminal 1, the authentication and resource control server 7 sends back a negative IP address reservation answer to the remote access server 3 in step S25.

Since the IP address cannot be reserved for the subscriber terminal 1, the remote access server 3 sends the "REL" signal for representing the channel release to the subscriber exchange 2 via the SS7 network in the same manner as the trunk resource blocking case in step S26. After receiving the "REL" signal from the remote access server 3, the subscriber exchange 2 sends the "Disconnect" signal for requesting the calling disconnection to the subscriber terminal 1 to finish the connection in step S27. Then, the subscriber terminal 1 disconnects the calling.

In the embodiments of the present invention, the remote access server can cover a system which is provided with a server for regarding the Internet to be equivalent to a trunk line of a line switching by considering the resource such as the IP address to be a line switching resource in order to reflect the IP resource situation and the like to the sequence at the call connection.

Although the present invention has been described in its preferred embodiments, it will be understood that various changes and modifications may be made in the invention without departing from the spirit and scope thereof. For example, although the operation has been described with reference to the SDH as the trunk line in the preferred embodiments, however, the same effects can be realized in the trunk line such as T1, E1 and the like.

As described above, in an IP address assignment system and its process method of the present invention, an IP address is reserved for a user or a subscriber terminal and hence a calling disconnection can be made at the IP address reservation answer without charging a telephone call cost at an IP address assignment.

In the IP address assignment system and its process method of the present invention, when a plurality of service providers are contained in the same trunk group, the IP addresses are controlled by an external server, and the IP address control number is made larger than the entire number of the trunk lines according to traffic characteristics. As a result, the line resource can be effectively used.

Further, in the IP address assignment system and its process method of the present invention, the NNI connection is used for linking between the remote access server and the subscriber exchange, and the service providers can be identified on the basis of the information obtained by the NNI connection, which cannot be obtained in the UNI connection.

In the IP address assignment system and its process method of the present invention, the resource control function and the authentication function are combined, and the authentication operation based on the sender number can be carried out when the IP address is reserved.

Furthermore, in the IP address assignment system and its process method of the present invention, the NNI connection is used for linking between the remote access server and the subscriber exchange, and a large scale system can be effectively built up using a small number of cables.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. An internet protocol address assignment system comprising a subscriber terminal (1), a subscriber exchange (2), a remote access server (3), an authentication server (5) and a resource control server (6), the remote access server (3) being connected to the subscriber exchange (2) using a network node interface, an internet protocol address being assigned to the subscriber terminal (1) using the authentication server (5) and the resource control server (6),
wherein the remote access server (3) comprises means for receiving a calling sent from the subscriber terminal (1) via the subscriber exchange (2), means for sending an IP address reservation signal to the resource control server (6), wherein the resource control server (6) comprises means for receiving the IP address reservation signal to reserve the internet protocol address on the basis of information whether or not there is any internet protocol address to be assigned to the subscriber terminal (1), wherein the remote access server (3) comprises means for assigning the internet protocol address reserved in the resource control server (6) to the subscriber terminal (1) after receiving a positive authentication answer from the authentication server (5), and means for releasing the line when there is no internet protocol address to be assigned to the subscriber terminal (1), wherein the authentication server (5) and the resource control server (6) are separate.

2. The internet protocol address assignment system as claimed in claim 1, wherein the authentication server (5) is adapted to execute the authentication on the basis of a sender number of the subscriber terminal (1).

3. The internet protocol address assignment system as claimed in claim 1, wherein the remote access server (3) is connected to the subscriber exchange (2) via a public switched telephone network and a signalling system number 7 signal network.

4. A processing method of an internet protocol address assignment system comprising a subscriber terminal (1), a subscriber exchange (2), a remote access server (3), an authentication server (5) and a separate resource control server (6), the remote access server (3) being connected to the subscriber exchange (2) using a network node interface, an internet protocol address being assigned to the subscriber terminal (1) using the authentication server (5) and the resource control server (6), comprising the steps of:
(S1) calling from the subscriber terminal (1) to the subscriber exchange (2);
(S3) notifying the remote access server (3) of the calling from the subscriber terminal (1) to the subscriber exchange (2);
(S4) sending an IP address reservation signal to the resource control server (6);
confirming whether or not there is any internet protocol address to be assigned to the subscriber terminal (1) by the resource control server (6);
reserving the internet protocol address to be assigned to the subscriber terminal (1) in the resource control server (6) on the basis of the confirmation result of the resource control server (6);
(S5) notifying the remote access server (3) whether or not the resource control server (6) reserves the internet protocol address to be assigned to the subscriber terminal (1);
(S9) sending an authentication request of the subscriber terminal (1) to the remote access server (3);
(S 10) sending the authentication request from the remote access server (3) to the authentication server (9);
authenticating the subscriber terminal (1) by the authentication server (5);
(S11) notifying the remote access server (3) of the authentication result of the authentication server (5);
(S 14) assigning the internet protocol address reserved in the resource control server (6) to the subscriber terminal (1) after receiving a positive authentication answer from the authentication server (5), and
(S16) causing the subscriber exchange (2) to release the line, when there is no internet protocol address to be assigned to the subscriber terminal (1).

5. The processing method as claimed in claim 4, wherein the authentication server (5) executes the authentication on the basis of a sender number of the subscriber terminal. (1).

6. The processing method of claim 4 or 5, wherein the remote access server (3) is connected to the subscriber exchange (2) via a public switched telephone network and a signalling system number 7 signal network.

## Patentansprüche

1. Internetprotokolladressen-Zuweisungssystem mit einem Teilnehmeranschluss (1), einer Teilnehmervermittlung (2), einem Fernzugriffserver (3), einem Authentisierungsserver (5) und einem Ressourcensteuerserver (6), wobei der Fernzugriffserver (3) mit der Teilnehmervermittlung (2) mittels einer Netzwerksknotenschnittstelle verbunden ist, wobei eine Internetprotokolladresse dem Teilnehmeranschluss (1) mittels des Authentisierungsservers (5) und des Ressourcensteuerservers (6) zugewiesen wird,
wobei der Fernzugriffserver (3) ein Mittel zum Empfangen eines Anrufs, der von dem Teilnehmeranschluss (1) über die Teilnehmervermittlung (2) gesendet wurde, und ein Mittel zum Senden eines Reservierungssignals der Internetprotokolladresse an den Ressourcensteuerserver (6) aufweist, wobei der Ressourcensteuerserver (6) ein Mittel zum Empfangen eines Reservierungssignals der Internetprotokolladresse aufweist, um die Internetprotokolladresse basierend auf den Informationen zu reservieren, ob oder ob nicht eine Internetprotokolladresse dem Teilnehmeranschluss (1) zuzuweisen ist, wobei der Fernzugriffserver (3) ein Mittel zum Zuweisen der Internetprotokolladresse aufweist, die in dem Ressourcensteuerserver (6) für den Teilnehmeranschluss (1) reserviert wurde, nachdem eine positive Authentisierungsantwort von dem Authentisierungsserver (5) empfangen wurde, und ein Mittel zum Freigeben der Leitung aufweist, wenn dort keine Internetprotokolladresse dem Teilnehmeranschluss (1) zuzuweisen ist, wobei der Authentisierungsserver (5) und der Ressourcensteuerserver (6) getrennt sind.

2. Internetprotokolladressen-Zuweisungssystem nach Anspruch 1, wobei der Authentisierungsserver (5) angepasst ist, die Authentisierung basierend auf einer Sendernummer des Teilnehmeranschlusses (1) durchzuführen.

3. Internetprotokolladressen-Zuweisungssystem nach Anspruch 1, wobei der Fernzugriffserver (3) mit der Teilnehmervermittlung (2) über ein öffentlich geschaltetes Telefonnetzwerk und ein Signalnetzwerk der Signalsystemzahl 7 verbunden ist.

4. Bearbeitungsverfahren eines Internetprotokolladressen-Zuweisungssystems mit einem Teilnehmeranschluss (1), einer Teilnehmervermittlung (2), einem Fernzugriffserver (3), einem Authentisierungsserver (5) und einem getrennten Ressourcensteuerserver (6), wobei der Fernzugriffserver (3) mit der Teilnehmervermittlung (2) mittels einer Netzwerksknotenschnittstelle verbunden ist, wobei eine Internetprotokolladresse dem Teilnehmeranschluss (1) mittels des Authentisierungsservers (5) und des Ressourcensteuerservers (6) zugewiesen ist, wobei das Verfahren die Schritte aufweist:
(S1) Anrufen von dem Teilnehmeranschluss (1) an die Teilnehmervermittlung (2),
(S3) Benachrichtigen des Fernzugriffservers (3) über den Anruf von dem Teilnehmeranschluss (1) an die Teilnehmervermittlung (2),
(S4) Senden eines Reservierungssignals der Internetprotokolladresse an den Ressourcensteuerserver (6),
Bestimmen, ob oder ob nicht eine Internetprotokolladresse dem Teilnehmeranschluss (1) durch den Ressourcensteuerserver (6) zuzuweisen ist,
Reservieren der Internetprotokolladresse, die dem Teilnehmeranschluss (1) zuzuweisen ist, basierend auf den Informationen des Bestättigungsergebnisses von dem Ressourcensteuerserver (6),
(S5) Benachrichtigen des Fernzugriffservers (3), ob oder ob nicht der Ressourcensteuerserver (6) die Internetprotokolladresse reserviert, die dem Teilnehmeranschluss (1) zuzuweisen ist,
(S9) Senden einer Authentisierungsanfrage des Teilnehmeranschlusses (1) an den Fernzugriffserver (3),
(S10) Senden der Authentisierungsanfrage von dem Fernzugriffserver (3) an den Authentisierungsserver (5),
Authentisieren des Teilnehmeranschlusses (1) durch den Authentisierungsserver (5),
(S11) Benachrichtigen des Fernzugriffservers (3) über das Authentisierungsergebnis des Authentisierungsservers (5),
(S 14) Zuweisen der Internetprotokolladresse, die in dem Ressourcensteuerserver (6) für den Teilnehmeranschluss (1) reserviert wurde, nachdem eine positive Authentisierungsantwort von dem Authentisierungsserver (5) empfangen wurde, und
(S16) Bewirken, dass die Teilnehmervermittlung (2) die Leitung freigibt, wenn dort keine Internetprotokolladresse dem Teilnehmeranschluss (1) zuzuweisen ist.

5. Bearbeitungsverfahren nach Anspruch 4, wobei der Authentisierungsserver (5) die Authentisierung basierend auf einer Sendernummer des Teilnehmeranschlusses (1) durchführt.

6. Bearbeitungsverfahren nach Anspruch 4 oder 5, wobei der Fernzugriffserver (3) mit der Teilnehmervermittlung (2) über ein öffentlich geschaltetes Telefonnetzwerk und ein Signalnetzwerk der Signalsystemzahl 7 verbunden ist.

## Revendications

1. Système d'attribution d'adresse de protocole Internet comprenant un terminal d'abonné (1), un central d'abonné (2), un serveur d'accès à distance (3), un serveur d'authentification (5) et un serveur de commande des ressources (6), le serveur d'accès à distance (3) étant connecté au central d'abonné (2) en utilisant une interface de noeud de réseau, une adresse de protocole Internet étant attribuée au terminal d'abonné (1) en utilisant le serveur d'authentification (5) et le serveur de commande des ressources (6),
dans lequel le serveur d'accès à distance (3) comprend des moyens pour recevoir un appel envoyé depuis le terminal d'abonné (1) via le central d'abonné (2), des moyens pour envoyer un signal de réservation d'adresse IP au serveur de commande des ressources (6), dans lequel le serveur de commande des ressources (6) comprend des moyens pour recevoir le signal de réservation d'adresse IP pour réserver l'adresse de protocole Internet sur la base de l'information selon laquelle il y a ou non une adresse de protocole Internet à attribuer au terminal d'abonné (1), dans lequel le serveur d'accès à distance (3) comprend des moyens pour attribuer l'adresse de protocole Internet réservée dans le serveur de commande des ressources (6) au terminal d'abonné (1) après réception d'une réponse d'authentification positive du serveur d'authentification (5), et des moyens pour libérer la ligne lorsqu'il n' y a pas d' adresse de protocole Internet à attribuer au terminal d'abonné (1), dans lequel le serveur d'authentification (5) et le serveur de commande des ressources (6) sont séparés.

2. Système d'attribution d'adresse de protocole Internet selon la revendication 1, dans lequel le serveur d'authentification (5) est adapté pour exécuter l'authentification sur la base d' un numéro d'émetteur du terminal d'abonné (1).

3. Système d'attribution d'adresse de protocole Internet selon la revendication 1, dans lequel le serveur d'accès à distance (3) est connecté au central d'abonné (2) via un réseau téléphonique public commuté et un réseau de signaux du système de signalisation numéro 7.

4. Procédé de traitement d' un système d'attribution d'adresse de protocole Internet comprenant un terminal d'abonné (1), un central d'abonné (2), un serveur d'accès à distance (3), un serveur d'authentification (5) et un serveur de commande des ressources séparé (6), le serveur d'accès à distance (3) étant connecté au central d'abonné (2) en utilisant une interface de noeud de réseau, une adresse de protocole Internet étant attribuée au terminal d'abonné (1) en utilisant le serveur d'authentification (5) et le serveur de commande des ressources (6), comprenant les étapes consistant à :
(S1) appeler du terminal d'abonné (1) au central d' abonné (2) ;
(S3) notifier au serveur d'accès à distance (3) l'appel du terminal d' abonné (1) au central d' abonné (2) ;
(S4) envoyer un signal de réservation d'adresse IP au serveur de commande des ressources (6) ;
confirmer s'il y a ou non une adresse de protocole Internet à attribuer au terminal d'abonné (1) par le serveur de commande des ressources (6) ;
réserver l'adresse de protocole Internet à attribuer au terminal d'abonné (1) dans le serveur de commande des ressources (6) sur la base du résultat de la confirmation du serveur de commande des ressources (6) ;
(S5) notifier au serveur d'accès à distance (3) si le serveur de commande des ressources (6) réserve ou non l'adresse de protocole Internet à attribuer au terminal d'abonné (1) ;
(S9) envoyer une requête d'authentification du terminal d' abonné (1) au serveur d'accès à distance (3) ;
(S10) envoyer la requête d'authentification du serveur d'accès à distance (3) au serveur d'authentification (9) ;
authentifier le terminal d'abonné (1) par le serveur d'authentification (5) ;
(S11) notifier au serveur d'accès à distance (3) le résultat de l'authentification du serveur d'authentification (5) ;
(S14) attribuer l'adresse de protocole Internet réservée dans le serveur de commande des ressources (6) au terminal d'abonné (1) après réception d' une réponse d'authentification positive du serveur d'authentification (5) , et
(S16) faire libérer la ligne par le central d'abonné (2) , lorsqu'il n' y a pas d'adresse de protocole Internet à attribuer au terminal d'abonné (1).

5. Procédé de traitement selon la revendication 4, dans lequel le serveur d'authentification (5) exécute l'authentification sur la base d'un numéro d'émetteur du terminal d'abonné (1).

6. Procédé de traitement selon la revendication 4 ou 5, dans lequel le serveur d'accès à distance (3) est connecté au central d'abonné (2) via un réseau téléphonique public commuté et un réseau de signaux du système de signalisation numéro 7.
